# DEMANDE DE BREVET EUROPEEN

(11) **EP 1 205 346 A1**
(43) Date de publication de la demande: **15.05.2002**
(21) Numéro de dépôt: 01402760.1
(22) Date de dépôt: 24.10.2001
(51) Int. Cl.: B60P 1/38

(54) **Véhicule de transport de marchandises pourvu de moyens de chargement perfectionnés**

(30) Priorité: 13.11.2000 FR 0014553
(71) Demandeur: Grosse, Gérard, 76270 Neufchatel-en-Bray (FR)
(72) Inventeur: Grosse, Gérard, 76270 Neufchatel-en-Bray (FR)
(74) Mandataire: Jacobson, Claude

(57) **Abrégé**

Véhicule de transport de marchandises comprenant une caisse (2) de chargement de marchandises et un plateau élévateur (3) placé à l'arrière de la plate-forme (4) de la caisse, caractérisé en ce qu'il comporte en outre un transporteur à bande longitudinal (15) disposé dans la plate-forme (4) de la caisse (2) et débouchant sur le plateau élévateur (3).

## Description

La présente invention est relative aux véhicules routiers de transport de marchandises.

Un tel véhicule comporte généralement une plate-forme de chargement sur laquelle est disposée une caisse de réception de marchandises.

De nombreux véhicules de ce type sont équipés de portes arrière et/ou d'un plateau élévateur relevable en position escamotée contre la face arrière de la caisse.

Cependant, le chargement et le déchargement par l'arrière du véhicule sont des opérations longues et pénibles et nécessitent un chargement par lots destinés aux clients successifs à livrer, sans possibilité de modifier l'ordre de livraison.

On connaît également des véhicules dont les parois latérales de la caisse sont escamotables et dont un côté comporte un plateau élévateur latéral.

Un tel agencement permet au véhicule d'être chargé latéralement en groupant les marchandises par catégories et d'être déchargé également latéralement par le chauffeur livreur qui compose le groupage des marchandises destinées à un client en fonction de la feuille de livraison de ce client en prélevant les différentes marchandises à leurs emplacements de groupage dans la caisse du véhicule.

Cependant, un véhicule pourvu de parois latérales escamotables et d'un plateau élévateur latéral présente l'inconvénient d'occuper beaucoup de place sur la chaussée lorsqu'il stationne en double file en raison de la nécessité de déployer le plateau élévateur latéral le long de véhicules en stationnement normal en face du lieu de livraison d'où il résulte une gène très importante pour la circulation.

De plus, le déploiement du plateau élévateur latéral lorsque le véhicule stationne en double file présente des risques pour les véhicules en stationnement normal voisins si l'intervalle entre ces véhicules et le véhicule de livraison n'est pas bien respecté.

Par ailleurs, le travail du livreur est rendu pénible lorsqu'il est obligé de manipuler de lourdes charges telles que des caisses de bouteilles ou des fûts de bière entre leur emplacement de stockage dans la caisse du véhicule et le plateau élévateur latéral.

Enfin, la faible largeur du plateau élévateur latéral peut engendrer une situation de travail dangereuse pour le livreur lorsque le plateau est en position haute par rapport au sol.

L'invention vise à remédier aux inconvénients des véhicules de transport de marchandises ou camions de type connu en créant un véhicule de transport de marchandises qui tout en permettant au véhicule de stationner en double file avec un minimum d'inconvénients pour les véhicules voisins, rende le travail du livreur le moins pénible possible.

Elle a donc pour objet un véhicule de transport de marchandises comprenant une caisse de chargement de marchandises et un plateau élévateur placé à l'arrière de la plate-forme de la caisse, caractérisé en ce qu'il comporte en outre un transporteur à bande longitudinal disposé dans la plate-forme de la caisse et débouchant sur le plateau élévateur.

Suivant d'autres caractéristiques de l'invention :
- le transporteur à bande est disposé dans un couloir longitudinal central de la caisse du véhicule délimitant deux zones de chargement situées de part et d'autre dudit couloir ;
- la surface supérieure du transporteur à bande affleure le plateau élévateur lorsque celui-ci se trouve en position haute ;
- le transporteur à bande est logé dans un canal longitudinal ménagé dans la plate-forme ;
- le transporteur à bande est disposé entre deux butées longitudinales de maintien transversal des marchandises reposant sur la plate-forme ;
- le long dudit couloir sont disposées des parois légères escamotables de maintien latéral de la cargaison dans les zones de chargement du volume de chargement ;
- les parois légères sont des rideaux enroulables sous le toit de la caisse au moyen d'enrouleurs ;
- les parois légères sont des rideaux ou des sangles horizontales enroulables contre la face avant de la caisse au moyen d'enrouleurs verticaux ;
- une butée escamotable est prévue à l'extrémité du transporteur à bande située en regard du plateau élévateur ;
- la caisse comporte en outre des parois latérales ouvrantes pour le chargement ;
- les parois latérales ouvrantes sont escamotables verticalement en totalité.

L'invention sera mieux comprise à la lecture de la description qui va suivre, donnée uniquement à titre d'exemple et faite en se référant aux dessins annexés, sur lesquels :
- la Fig.1 est une vue en perspective avec arrachement partiel d'un véhicule de transport de marchandises suivant l'invention ;
- la Fig.2 est une vue de l'arrière avec arrachement partiel du véhicule de la figure 1, plateau élévateur enlevé ; et
- la Fig.3 est une vue en perspective avec arrachement partiel d'un véhicule de transport de marchandises équipé de parois légères longitudinales suivant une variante de l'invention.

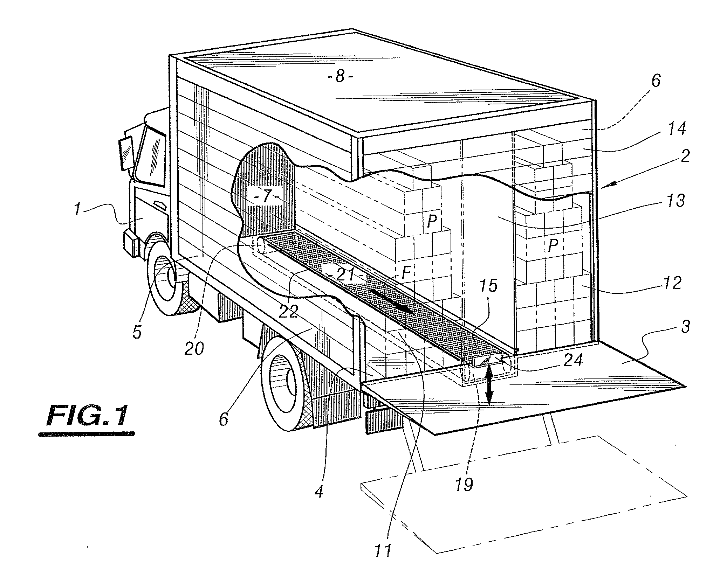

Sur la figure 1, on a représenté en perspective avec arrachement partiel, un véhicule ou camion de transport de marchandises comportant une cabine 1 et une caisse 2 de chargement de marchandises.

A l'arrière de la caisse 2 est monté un plateau élévateur 3 représenté en position horizontale active ou haute au niveau de la plate-forme 4 supportant la caisse 2.

Le plateau élévateur 3 est déplaçable en hauteur par un mécanisme électro-hydraulique ( non représenté) commandé par l'utilisateur, entre sa position haute représentée sur la figure 1 et une position basse au niveau du sol, de chargement et de déchargement.

Il est en outre déplaçable angulairement par des moyens connus, non représentés, entre sa position haute, active, représentée à la figure 1 et une position verticale inactive, escamotée contre l'arrière de la caisse.

La caisse 2 du véhicule est pourvue de parois latérales ouvrantes 5 équipées de rideaux escamotables 6 permettant de dégager la totalité des côtés de la caisse pour accéder à son volume de chargement 7 sur toute sa longueur.

Ces rideaux escamotables 6 sont formés par exemple de lattes articulées, de panneaux articulés ou encore de toiles enroulables sous le toit 8 de la caisse 2.

Le volume de chargement 7 est séparé en deux zones 11,12 par un couloir central longitudinal 13 d'accès aux marchandises de l'intérieur de la caisse. Il est fermé à l'arrière par un rideau relevable 14.

Dans le couloir 13 est disposé un transporteur à bande 15 dont la surface supérieure affleure le plateau élévateur 3 lorsque celui-ci se trouve en position haute.

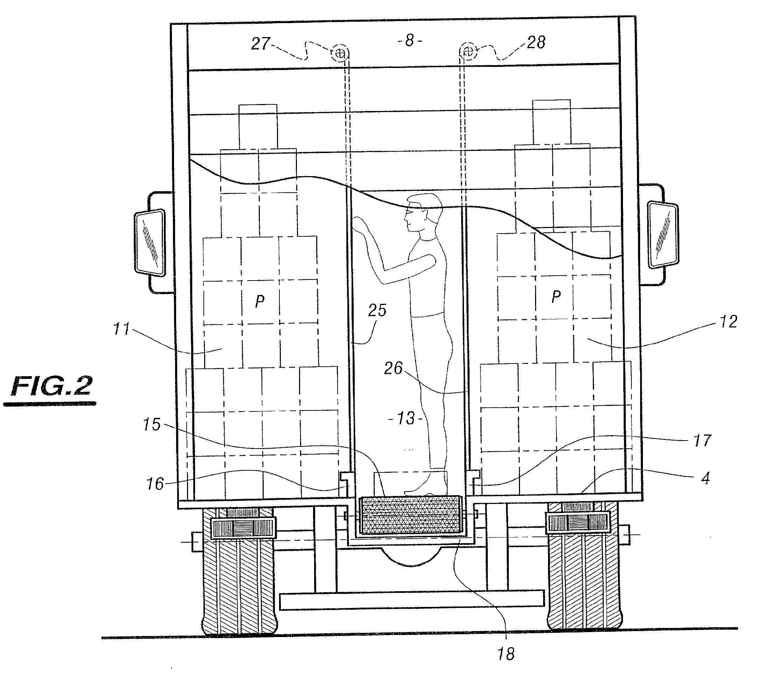

Comme représenté plus en détail à la figure 2, le transporteur à bande 15 est disposé entre deux butées longitudinales 16,17 de maintien transversal des marchandises reposant sur la plate-forme 4.

Il est logé dans un canal longitudinal 18 ménagé dans la plate-forme 4.

Le transporteur à bande comporte avantageusement des rouleaux d'extrémité 19,20.

Le rouleau 19 est entraîné en rotation par un moto-réducteur électro-hydraulique non représenté pour déplacer la bande 21 du transporteur dans le sens du déchargement représenté par la flèche F de la figure 1.

La bande 21 est déplaçable le long d'une plaque de support rigide 22 permettant la circulation de l'utilisateur dans le couloir 14.

A son extrémité située en regard du plateau élévateur 3, il est prévu une butée escamotable 24 pour les marchandises placées sur le transporteur.

Enfin, le couloir 13 est pourvu de deux parois longitudinales légères 25,26 de maintien latéral de la cargaison dans les zones 11 et 12 du volume de chargement 7.

Les parois légères sont par exemple des rideaux enroulables sous le toit de la caisse au moyen d'enrouleurs 27,28 et maintenus déployés par des attaches non représentées dont sont pourvues les butées longitudinales 16,17.

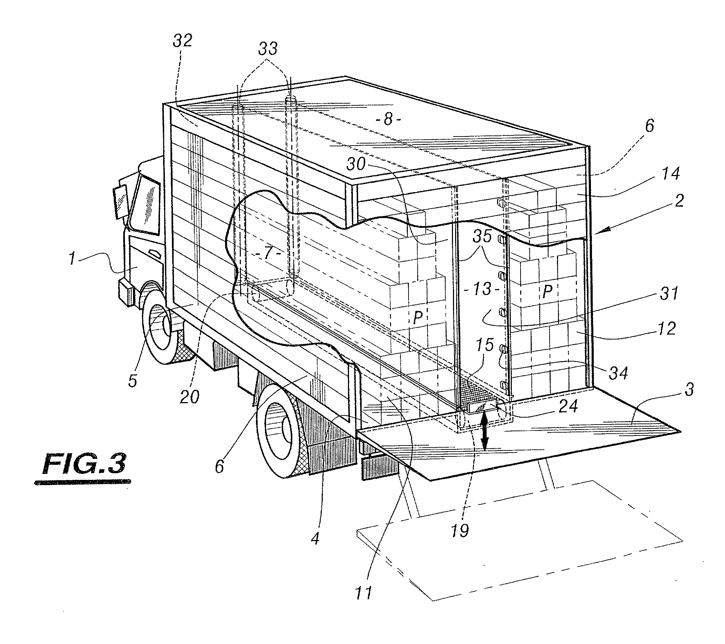

Selon une variante représentée à la figure 3, les parois légères sont des rideaux 30,31 enroulables contre la paroi verticale avant 32 de la caisse au moyen d'enrouleurs verticaux 33 et sont maintenus déployés au moyen d'attaches 34 prévues sur des montants verticaux 35 disposés à l'arrière de la caisse.

Selon encore une autre variante, les rideaux 30,31 peuvent être remplacés par des sangles horizontales enroulables respectivement sur des enrouleurs placés verticalement les uns au-dessus des autres.

Le véhicule décrit en référence aux figures 1 et 2 est utilisé de la manière suivante.

Pour procéder à son chargement, on ouvre les parois latérales de la caisse 2 en relevant les rideaux 6. Le véhicule est alors déplacé par exemple le long de quais sur lesquels sont entreposés des stocks de produits à charger groupés par catégories.

Ainsi, les différents produits à livrer sont disposés par groupes à des emplacements déterminés des zones de chargement 11,12 du volume 7 de la caisse.

Les produits P sont chargés dans les zones de chargement 11,12 de manière à ne pas empiéter sur le couloir 13.

A cet effet, les produits P disposés directement sur la plate-forme 4 sont maintenus latéralement d'un côté par les butées latérales 16,17 et de l'autre, par les rideaux 6 après leur fermeture.

En outre les produits P superposés dans les zones de chargement 11,12 sont maintenus par les parois légères 25,26 de manière à ne pas risquer de tomber dans le couloir 13 lors du trajet de transport suivi par le véhicule.

Lorsque le véhicule est arrêté en vue de procéder à la livraison d'un client, dans le meilleur des cas, il stationne par exemple le long d'un trottoir situé en face du client à livrer ou encore, il s'arrête en double file le long de véhicules en stationnement normal et du fait que ces moyens de déchargement, permettent un déchargement par l'arrière, il peut se serrer au maximum contre les véhicules en stationnement sans risquer de les endommager, tout en laissant un maximum de place pour la circulation sur la chaussée.

Le chauffeur livreur procède alors au déploiement du plateau élévateur 3 dans la position représentée à la figure 1.

Il pénètre ensuite dans la caisse du véhicule par le couloir 13 et d'après les indications de sa feuille de livraison, il prend les produits P à livrer au client considéré dans les zones de chargement 11,12 pour les déposer sur le transporteur à bande 15 maintenu immobile.

Il met en place la butée escamotable 24.

Lorsque les produits à livrer au client considéré se trouvent sur le transporteur à bande 15, le conducteur sort de la caisse 2, actionne le transporteur 15 qui amène les produits à proximité du plateau élévateur 3.

La butée escamotable 24 immobilise les produits à la sortie du transporteur à bande assurant ainsi la formation du lot destiné au client.

Lorsque les produits sont ainsi groupés, le chauffeur livreur retire la butée escamotable 24 et dispose les produits sur le plateau élévateur 3. Il n'a plus alors qu'à commander la descente du plateau 3 pour assurer la livraison du lot de produits au client.

Bien entendu, le transporteur à bande 15 et le plateau élévateur 3 sont commandés par un dispositif qui permet leur mise en route alternée assurant que le transporteur à bande ne puisse fonctionner que lorsque le plateau élévateur 3 se trouve dans la position haute représenté à la figure 1 et interdisant le fonctionnement du transporteur lorsque ce plateau est en position basse.

La réduction du volume de chargement de la caisse 2 dûe à la présence du couloir 13, peut être compensée par exemple en augmentant légèrement la longueur de la caisse sans nuire pour autant à l'encombrement général du véhicule.

On voit que grâce à l'agencement de l'invention, on dispose d'un véhicule de transport de marchandises permettant de réduire considérablement les efforts de manutention du chauffeur livreur lors du déchargement du véhicule en vue de la constitution des lots de livraison aux clients successifs.

Par ailleurs, il permet la sélection des marchandises en vue de leur livraison, à l'intérieur du véhicule et la manutention des charges ne se fait qu'au niveau du plateau élévateur arrière, créant ainsi les conditions de sécurité optimale pour le chauffeur livreur.

Selon le mode de réalisation qui vient d'être décrit, le transporteur à bande équipe un véhicule dont la caisse est pourvue de parois latérales ouvrantes, escamotables verticalement en totalité.

On comprendra que le transporteur à bande suivant l'invention peut également être monté dans un véhicule dont la caisse présente des parois latérales fixes.

## Revendications

1. Véhicule de transport de marchandises comprenant une caisse (2) de chargement de marchandises et un plateau élévateur (3) placé à l'arrière de la plate-forme (4) de la caisse, **caractérisé en ce que** la caisse (2) du véhicule comporte un transporteur à bande longitudinal (15) débouchant sur le plateau élévateur (3), et des parois latérales ouvrantes (5, 6) pour le chargement.

2. Véhicule de transport suivant la revendication 1, **caractérisé en ce que** les parois latérales ouvrantes (5, 6) sont escamotables verticalement en totalité.

3. Véhicule de transport suivant l'une des revendications 1 ou 2, **caractérisé en ce que** le transporteur à bande (15) est disposé dans la plate-forme (4) de la caisse (2).

4. Véhicule de transport suivant l'une des revendications précédentes, **caractérisé en ce que** le transporteur à bande (15) est disposé dans un couloir longitudinal central (13) de la caisse du véhicule délimitant deux zones de chargement (11 ; 12) situées de part et d'autre dudit couloir.

5. Véhicule de transport suivant l'une des revendications précédentes, **caractérisé en ce que** la surface supérieure du transporteur à bande affleure le plateau élévateur (3) lorsque celui-ci se trouve en position haute.

6. Véhicule de transport suivant l'une des revendications précédentes, **caractérisé en ce que** le transporteur à bande est logé dans un canal longitudinal (18) ménagé dans la plate-forme (4).

7. Véhicule de transport suivant l'une des revendications 4 à 6, **caractérisé en ce que** le transporteur à bande (15) est disposé entre deux butées longitudinales (16, 17) de maintien transversal des marchandises reposant sur la plate-forme (4).

8. Véhicule de transport suivant l'une des revendications 4 à 7, **caractérisé en ce que** le long dudit couloir sont disposées des parois légères (25, 26 ; 30, 31) de maintien latéral de la cargaison dans les zones de chargement (11, 12) du volume de chargement (7).

9. Véhicule de transport suivant la revendication 8, **caractérisé en ce que** les parois légères (25, 26) sont des rideaux enroulables sous le toit (8) de la caisse (2) au moyen d'enrouleurs (27, 28).

10. Véhicule de transport suivant la revendication 8, **caractérisé en ce que** les parois légères sont des rideaux (30, 31) ou des sangles horizontales enroulables contre la face avant (32) de la caisse au moyen d'enrouleurs verticaux (33).

11. Véhicule de transport suivant l'une des revendications précédentes, **caractérisé en ce qu'**une butée escamotable (24) est prévue à l'extrémité du transporteur à bande (15) située en regard du plateau élévateur (3).
